(19) **Europäisches Patentamt / European Patent Office / Office européen des brevets**

(11) **EP 3 727 974 B1**

(12) **FASCICULE DE BREVET EUROPEEN**

(45) Date de publication et mention de la délivrance du brevet:
**31.05.2023 Bulletin 2023/22**

(21) Numéro de dépôt: **18826436.0**

(22) Date de dépôt: **06.12.2018**

(51) Classification Internationale des Brevets (IPC):
**B60W 30/10** (2006.01)   **G06V 20/56** (2022.01)
**G08G 1/16** (2006.01)   **B62D 15/02** (2006.01)

(52) Classification Coopérative des Brevets (CPC):
**B60W 30/10; B62D 15/0255; G06V 20/588; G08G 1/167;** B60W 2420/403; B60W 2420/52; G06T 2207/30256

(86) Numéro de dépôt international:
**PCT/FR2018/053136**

(87) Numéro de publication internationale:
**WO 2019/122572 (27.06.2019 Gazette 2019/26)**

(54) **PROCÉDÉ DE DÉTECTION DURANT UNE PHASE DE CONDUITE AUTOMATISÉE D'UN VEHICULE DE SA PRÉSENCE DANS UNE VOIE D'INSERTION VERS UNE ROUTE À CHAUSSÉE SEPARÉE**

VERFAHREN ZUM ERKENNEN, WÄHREND EINER AUTOMATISIERTEN FAHRPHASE EINES FAHRZEUGS, DES VORHANDENSEINS DESSELBEN IN EINER ZUFAHRTSSPUR, DIE IN EINE STRASSE MIT GETRENNTEN FAHRBAHNEN EINFÄHRT

METHOD FOR DETECTING, DURING AN AUTOMATED DRIVING PHASE OF A VEHICLE, THE PRESENCE OF SAME IN AN ACCESS LANE ENTERING A ROAD WITH SEPARATE CARRIAGEWAYS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2017 FR 1762791**

(43) Date de publication de la demande:
**28.10.2020 Bulletin 2020/44**

(73) Titulaire: **PSA Automobiles SA 78300 Poissy (FR)**

(72) Inventeurs:
• **RIZZO, Audrey 92150 Suresnes (FR)**
• **DESCHAMPS, Vincent 92130 Issy les Moulineaux (FR)**
• **THEEL, Florian 92140 Clamart (FR)**
• **ETCHEVERRY, Celine 91370 Verrieres le Buisson (FR)**

(56) Documents cités:
WO-A1-2017/023197   DE-A1-102007 018 990
US-A1- 2008 291 276   US-A1- 2014 032 047
US-A1- 2015 367 778

**Description**

Domaine de l'invention

La présente invention concerne le domaine des systèmes d'assistance à la conduite pour véhicules automobiles.

Elle vise en particulier la problématique de l'insertion d'un véhicule automobile dans une route à chaussée séparée durant une phase de conduite automatisée.

Arrière-plan de l'invention

Les systèmes d'assistance à la conduite sont désormais largement répandus dans les véhicules automobiles récents et connaissent un développement rapide.

Depuis peu, on commence à voir apparaitre des systèmes d'assistance à la conduite totalement autonomes.

Ces derniers ajustent de manière automatique la vitesse du véhicule afin de maintenir un intervalle de sécurité constant avec le véhicule précédant l'utilisateur à partir des informations recueillis sur ce véhicule (notamment la distance et la vitesse d'approche) à l'aide d'un ou plusieurs capteurs de type radar, lidar ou infrarouge.

Ils sont également aptes à gérer le positionnement du véhicule dans sa voie de circulation par rapport aux première et seconde lignes de marquage au sol délimitant cette voie et détectées via une caméra et/ou des capteurs externes.

Ces systèmes d'assistance à la conduite peuvent toutefois éprouver certaines difficultés dans certaines situations particulières et notamment lorsque le véhicule se trouve sur une voie d'insertion dans une route à chaussée séparée telle qu'une voie rapide ou une autoroute.

En effet, dans un tel cas de figure, le véhicule doit non seulement accélérer pour ajuster sa vitesse en fonction de la limitation de vitesse en vigueur sur la route à chaussée séparée qu'il s'apprête à rejoindre, mais également prendre en compte les autres véhicules situés sur la voie de droite de cette même route à chaussée séparée afin de s'y insérer sans danger.

Il est donc primordial que le système d'assistance soit capable de détecter avec une grande fiabilité la présence du véhicule sur une telle voie d'insertion.

On connaît de la demande de brevet US 2015/0154458 un procédé de détection de la présence du véhicule sur une telle voie d'insertion basé sur la recherche par analyse radar de l'environnement du véhicule d'une discontinuité au niveau de l'une des barrières de sécurité délimitant latéralement la voie de circulation.

Un tel procédé ne peut toutefois être mis en oeuvre sur de nombreux territoires où la plupart des routes sont dépourvues de telles barrières de sécurité.

US 2014/032047, US 2015/367778, WO 2017/023197, US 2008/291276 et DE 10 2007 018990 sont aussi des demandes de brevet dans le domaine technique de l'invention.

Objet et résumé de l'invention

La présente invention vise à améliorer la situation.

Elle propose à cet effet un procédé de détection, tel que défini par la revendication 1.

Le procédé selon l'invention permet de détecter de manière particulièrement fiable la présence du véhicule sur une voie d'insertion vers une route à chaussée séparée durant une phase de conduite automatisée, de sorte à donner la possibilité au véhicule autonome de réagir en conséquence en adaptant sa conduite longitudinale et latérale.

Selon l'invention, lorsque l'existence d'une dite route à chaussée séparée n'est pas identifiée à partir de la position du véhicule et des données de cartographie, la présence dudit véhicule sur une dite voie d'insertion n'est validée que si l'une desdites lignes de démarcation est de type discontinue et présente une largeur supérieure ou égale à une largeur minimale prédéterminée.

Selon des caractéristiques préférées du procédé selon l'invention, prises seules ou en combinaison, -ladite largeur minimale prédéterminée est comprise entre 250 et 300 mm ;

- ladite distance de contrôle est supérieure de quelques dizaines de mètres à ladite distance de convergence ;
- ladite distance d'anticipation est comprise entre 100 et 200 mètres ;
- ledit procédé comporte, après validation de la présence dudit véhicule sur une dite voie d'insertion, une étape d'adaptation du contrôle longitudinal et latéral du véhicule à ce contexte de conduite particulier ;
- ladite étape d'adaptation consiste pour le contrôle longitudinal à ajuster à la hausse la vitesse dudit véhicule en tenant compte de la limitation de vitesse de la route à chaussée séparée sur laquelle il va prochainement s'insérer, et à prendre en compte les véhicules circulant sur la voie de ladite route à chaussée séparée jouxtant ladite voie de circulation ;

- ladite étape d'adaptation consiste pour le contrôle latéral à ajuster la trajectoire en tenant compte uniquement de la ligne de démarcation extérieure de ladite voie de circulation, et à autoriser ledit véhicule à traverser la ligne intérieure de démarcation de ladite voie de circulation ;
- ladite étape de vérification d'une prochaine convergence des lignes de démarcation définissant la voie de circulation dudit véhicule comporte les sous-étapes suivantes :

  • détermination, à partir des données capturées par des moyens de détection optique surveillant l'environnement situé en avant du véhicule, des profils des deux lignes de démarcation définissant la voie de circulation dudit véhicule sur la distance de visibilité desdites lignes par lesdits moyens de détection ;
  • extrapolation des profils desdites lignes de démarcation entre ladite distance de visibilité et une distance d'anticipation prédéterminée ;
  • vérification de la convergence desdites lignes de démarcation sur ladite distance d'anticipation ;
  • mémorisation en cas de convergence détectée de la distance de convergence desdites lignes de démarcation ;
  • actualisation, au terme d'un délai prédéterminé, de ladite distance de convergence en soustrayant à la valeur précédemment mémorisée la distance parcourue par ledit véhicule durant ledit délai ;
  • détermination, de manière simultanée à ladite étape d'actualisation, d'une seconde distance de convergence par reproduction desdites étapes de détermination des profils, d'extrapolation de ces derniers, de vérification de la convergence et de mémorisation ; et
  • validation de l'existence d'une prochaine convergence des profils des deux lignes de démarcation définissant la voie de circulation du véhicule si l'écart entre ladite distance de convergence actualisée et la seconde distance de convergence est inférieur ou égal à un intervalle prédéterminé ; et/ou

- ledit intervalle prédéterminé est compris entre 30 et 70 centi mètres.

Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :

- la figure 1 est un diagramme fonctionnel d'un système d'assistance automatisée à la conduite ;
- la figure 2 représente un organigramme du procédé selon l'invention de détection durant une phase de conduite automatisée d'un véhicule de sa présence dans une voie d'insertion vers une route à chaussée séparée ;
- la figure 3 montre un véhicule circulant sur une voie d'insertion vers une route à chaussée séparée ; et
- la figure 4 représente un organigramme détaillé de l'étape de vérification d'une prochaine convergence des lignes de démarcation définissant la voie de circulation du véhicule.

Description détaillée

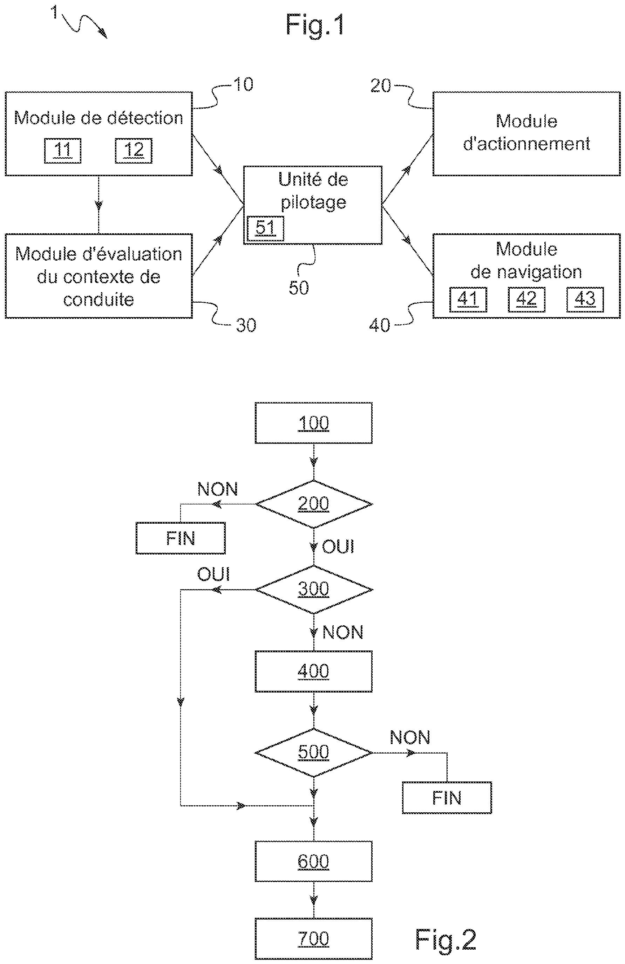

En référence à la figure 1, le système d'assistance automatisée à la conduite 1 comporte un module de détection 10, un module d'actionnement 20, un module d'évaluation du contexte environnemental de conduite 30, un module de navigation 40, ainsi qu'une unité de pilotage 50.

Le module de détection 10 comprend des moyens de détection optique permettant d'évaluer le contexte environnemental de conduite du véhicule et comprenant une caméra vidéo 11 implantée derrière le pare-brise.

Selon des variantes non représentées, le module de détection 10 peut comporter un lidar en remplacement de la caméra vidéo 11.

Le module 10 comporte également au moins un radar Doppler 12 apte à détecter les obstacles situé autour du véhicule.

Un tel radar émet de façon périodique et sur une zone de couverture un faisceau de signaux radiofréquence (RF) se reflétant sur les éventuels obstacles présents dans la zone de couverture et revenant en direction du radar. Si les fréquences des signaux émis et reçus présentent un décalage, cela signifie qu'un obstacle a pénétré dans la zone de couverture.

Le module 10 comprend en outre une pluralité de capteurs mesurant certains paramètres internes de conduite tels que la vitesse instantanée du véhicule et l'angle de braquage du volant.

Le module d'actionnement 20 comporte une pluralité d'actionneurs aptes à agir sur la direction, l'accélération, le freinage et la boîte de vitesse pour assurer une conduite entièrement automatisée du véhicule.

Le module d'évaluation du contexte environnemental de conduite 30 est apte à déterminer à partir des données fournies par le module de détection 10 le type de route empruntée (autoroute, voie rapide ou bien route secondaire), le marquage au sol (couleur, largeur et espacement des lignes), le niveau de fluidité du trafic routier et la présence éventuelle d'une barrière ou d'un terre-plein central de séparation entre les deux sens de circulation.

Le module de navigation 40 comprend un récepteur d'information de géo-positionnement par satellite 41 apte à déterminer la position du véhicule, une cartographie du réseau routier 42 et un système de calcul d'itinéraire 43.

Le récepteur d'information de géo-positionnement par satellite 41 est un récepteur utilisant le système GPS (Global Positioning System) qui capte les signaux radio transmis par au moins trois satellites du système GPS et peut, en calculant les temps de propagation de ces signaux entre les satellites et lui, connaître sa distance par rapport à ceux-ci et, par trilatération, déterminer avec une précision de plus ou moins 20 mètres, la position du véhicule placé en visibilité des satellites.

En variante, le récepteur de géo-positionnement par satellite 41 peut utiliser un autre système de géo-positionnement par satellite (GNSS), tel que par exemple le système GLONASS, le système BEIDOU ou encore le système GALILEO.

La cartographie 42, stockée dans une mémoire de type disque dur ou flash, référence l'ensemble des routes constituant le réseau routier en y associant avantageusement des données complémentaires ADAS (pour Advanced Driving Assistance System) relatives à la classification de ces routes, à leur géométrie (courbure, pente, etc.) et aux limitations de vitesses en vigueur.

L'ensemble des informations contenues dans la cartographie 42 peut être mis à jour par des moyens de communication ou des moyens de lecture d'un support de données.

Le module de calcul d'itinéraire 43 comporte un calculateur apte à déterminer un itinéraire sur le réseau routier depuis un point de départ défini par l'utilisateur ou correspondant à la position actuelle du véhicule, et jusqu'à un point de destination sélectionné par l'utilisateur.

L'unité de pilotage 50 qui gère la conduite autonome du véhicule, comporte au moins un calculateur associé à des moyens de stockage comprenant de la mémoire non volatile de type EEPROM ou FLASH et de la mémoire vive.

Lorsque le contexte évalué par le module d'évaluation du contexte environnemental de conduite 40 s'y prête (par exemple, en cas de trafic dense ou d'embouteillage lorsque le véhicule circule sur une route à chaussées séparées), l'unité de pilotage 50 est apte à commander le module d'actionnement 20 pour assurer une conduite entièrement autonome du véhicule.

En particulier, le contrôle du déplacement latéral du véhicule est piloté par un module d'assistance active de maintien de la trajectoire 51 intégré à cette unité de pilotage.

Selon l'invention, la mémoire non volatile de l'unité de pilotage 50 stocke un processus de détection durant une phase de conduite automatisée du véhicule de sa présence dans une voie d'insertion vers une route à chaussée séparée.

On va maintenant décrire en détails et à l'appui de l'organigramme de la figure 2, les différentes étapes de ce processus qui est mis en oeuvre de manière périodique suivant une période prédéterminée comprise de préférence entre 30 et 100 millisecondes et avantageusement égal à 40 millisecondes.

Celui-ci est initié lorsque le mode d'assistance à la conduite entièrement autonome est activé (étape initiale 100), les déplacements longitudinaux et latéraux du véhicule étant alors gérés de manière entièrement autonome par l'unité de pilotage 50.

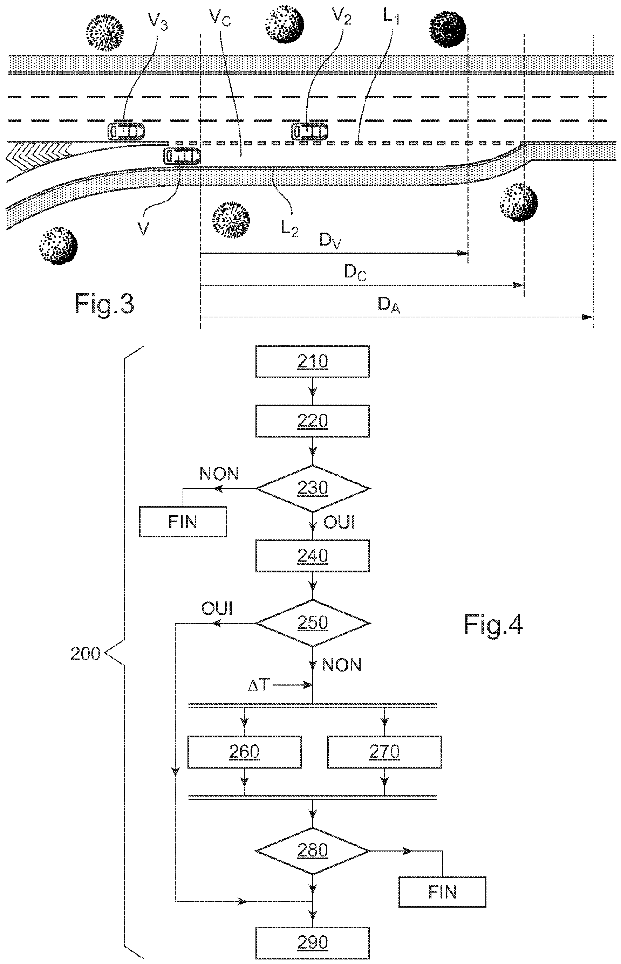

Le module d'assistance active de maintien de la trajectoire 51 vérifie alors au cours d'une étape 200 s'il détecte, en avant du véhicule V et sur une distance d'anticipation prédéterminée $D_A$ comprise par exemple entre 100 et 200 m, une prochaine convergence à une distance de convergence $D_C$ des lignes de démarcation $L_1$, L2 définissant la voie de circulation VC de ce véhicule V (voir figure 3).

Cette étape de vérification d'une prochaine convergence s'effectue avantageusement de la manière suivante en plusieurs sous-étapes successives (voir organigramme de la figure 4).

La première sous-étape 210 consiste à déterminer, à partir des données capturées par des moyens de détection optique 11 surveillant l'environnement situé en avant du véhicule V, les profils des deux lignes de démarcation $L_1$, $L_2$ définissant la voie de circulation $V_C$ de ce véhicule V sur la distance de visibilité Dv de ces lignes par les moyens de détection optique 11.

Il est à noter que la distance de visibilité Dv des lignes de démarcation $L_1$, $L_2$ évolue en fonction du contexte environnemental de conduite (cette dernière correspondra par exemple à la portée des moyens de détection optique 11 dans des conditions optimales mais pourra être nettement inférieure lorsque les conditions météo sont mauvaises (pluie, neige, brouillard) ou en cas d'embouteillage lorsque ces lignes sont dissimulées par des obstacles ou d'autres véhicules situés en amont.

Le module d'assistance active de maintien de la trajectoire 51 extrapole ensuite à la sous-étape suivante 220 les profils de ces deux lignes de démarcation $L_1$, $L_2$ entre la distance de visibilité Dv et la distance d'anticipation $D_A$.

Cette extrapolation des profils de ces deux lignes de démarcation $L_1$, $L_2$ est réalisée en les approximant chacune dans un espace affine plan muni d'un repère cartésien (X, Y) centré sur le véhicule à partir de la fonction polynômiale au troisième degré suivante :

$$Y = \frac{1}{6} \left(\text{dérivée initiale de la courbure}\right) X^3 + \frac{1}{2} \left(\text{courbure initiale}\right) X^2 + \left(\text{angle de lacet initial}\right) X + Y_0$$

où :

- X et Y correspondent respectivement aux composantes longitudinale et latérale d'un point appartenant à cette ligne de démarcation ;
- la dérivée initiale de la courbure correspond à la valeur de la dérivée de la courbure à l'origine du repère, c'est-à-dire au niveau du véhicule à X=0 ;
- la courbure initiale correspond à la valeur de la dérivée de la courbure à l'origine du repère, c'est-à-dire au niveau du véhicule à X=0 ;
- l'angle de lacet initial correspond à la valeur de l'angle de lacet à l'origine du repère, c'est-à-dire au niveau du véhicule à X=0 ; et
- $Y_0$ correspondant à la position latérale initiale de la ligne de démarcation à l'origine du repère, c'est-à-dire au niveau du véhicule à X=0.

Le processus recherche ensuite lors d'une sous-étape 230 si les deux lignes de démarcation $L_1$, $L_2$ convergent sur cette distance d'anticipation $D_A$.

Dans l'affirmative, le processus mémorise cette distance de convergence $D_C$ (sous-étape 240) puis contrôle si cette dernière est inférieure ou égale à la distance de visibilité Dv (sous-étape 250).

Si cette condition est remplie, l'unité de pilotage 50 considère que le risque d'erreur est quasiment nul et valide l'existence d'une prochaine convergence, à cette distance de convergence $D_C$, des profils des deux lignes de démarcation $L_1$, $L_2$ définissant la voie de circulation $V_C$ du véhicule V (sous-étape 290).

Si cette condition n'est pas remplie (autrement dit, si le point de convergence se situe dans la zone d'extrapolation), alors le processus estime que le risque d'erreur est plus important et va donc réaliser un contrôle.

Pour ce faire, il va réaliser au terme d'un délai prédéterminé $\Delta T$ (compris de préférence entre 0,5 et 1,5 secondes et de préférence égal à 1 seconde) une actualisation de la distance de convergence $D_C$ en soustrayant à la valeur mémorisée à la sous-étape 240 la distance parcourue par le véhicule durant ledit délai $\Delta T$ (cette distance étant obtenue à l'aide des données de vitesse du véhicule transmises par les capteurs du module 10) (sous-étape 260) ;

Simultanément à cette sous-étape d'actualisation, l'unité de pilotage 50 va également déterminer au cours d'une sous-étape 270 une seconde distance de convergence par reproduction des sous-étapes de détermination des profils (210), d'extrapolation de ces derniers (220), de recherche de convergence (230) et de mémorisation (240).

Le processus va ensuite vérifier si l'écart entre la distance de convergence actualisée et la seconde distance de convergence est inférieur ou égal à un intervalle prédéterminé compris de préférence entre 30 et 70 centimètres (sous-étape 280).

Si cette condition est vérifiée, l'unité de pilotage 50 estime que le risque d'erreur quasiment nul et valide l'existence d'une prochaine convergence à la distance de convergence actualisée des profils des deux lignes de démarcation $L_1$, $L_2$ définissant la voie de circulation $V_C$ du véhicule V (sous-étape 290).

Si à l'issu de l'étape de vérification 200, le module d'assistance active de maintien de la trajectoire 51 n'identifie pas de prochaine convergence des deux lignes de démarcation $L_1$, $L_2$ sur la distance d'anticipation $D_A$, l'unité de pilotage 50 estime que la voie de circulation $V_C$ du véhicule V ne peut être une voie d'insertion vers une route à chaussée séparée et le processus s'arrête (voir figure 2).

A contrario, si une telle convergence est détectée, le processus se poursuit par une étape 300 au cours de laquelle il vérifie, à partir de la position du véhicule et des données de cartographie transmises par le module de navigation 40, la présence d'une route à chaussée séparée au devant du véhicule et à une distance inférieure ou égale à une distance de contrôle prédéterminée légèrement supérieure de quelques dizaines de mètres (par exemple de 30 à 50 mètres) à la distance de convergence $D_C$, afin de tenir compte de l'imprécision de la position du véhicule provenant du récepteur d'information de géo-positionnement par satellite 41 et du niveau d'erreur concernant la valeur de cette distance de convergence $D_C$.

Si cette condition est remplie, l'unité de pilotage 50 considère que le risque d'erreur est quasiment nul et valide directement la présence du véhicule V sur une voie d'insertion vers une route à chaussée séparée (étape 600).

Dans le cas contraire (autrement dit, si aucune route à chaussée séparée n'est cartographiée au devant du véhicule V à une distance inférieure ou égale à une distance maximale prédéterminée), alors le processus estime que le risque d'erreur est plus important.

Le module d'assistance active de maintien de la trajectoire 51 va ainsi analyser, au cours d'une nouvelle étape 400 et à partir des données capturées par des moyens de détection optique 11, les caractéristiques des lignes de démarcation de la voie de circulation $V_C$ du véhicule V.

Après analyse, le processus vérifie lors de l'étape 500 si l'une de ces lignes de démarcation $L_1$, $L_2$ est de type

discontinue (c'est-à-dire en pointillés) et présente une largeur supérieure ou égale à une largeur minimale prédéterminée comprise avantageusement entre 250 et 300 mm.

Si tel est le cas, alors l'unité de pilotage 50 considère que le risque d'erreur est quasiment nul et valide la présence du véhicule V sur une voie d'insertion vers une route à chaussée séparée (étape 600).

Dans le cas contraire, l'unité de pilotage 50 estime que la voie de circulation $V_C$ du véhicule V ne peut être une voie d'insertion vers une route à chaussée séparée et le processus s'arrête.

Lorsque la présence du véhicule V sur une voie d'insertion vers une route à chaussée séparée a été validée, le processus demande alors au module d'actionnement 20 d'adapter le contrôle longitudinal et latéral du véhicule à ce contexte de conduite particulier (étape 700).

Cette adaptation consistera par exemple pour le contrôle longitudinal :

- en un ajustement à la hausse de la vitesse du véhicule tenant compte de la limitation de vitesse de la route à chaussée séparée sur laquelle il va prochainement s'insérer (cette information étant issue des données de cartographie transmises par le module de navigation 40), et
- en une prise en compte des véhicules $V_2$, $V_3$ circulant sur la voie $V_A$ de la route à chaussée séparée R jouxtant la voie sur laquelle circule le véhicule V et détectés par le radar 12 (voir figure 3).

En ce qui concerne le contrôle latéral, la consigne d'adaptation consistera par exemple :

- en un ajustement de la trajectoire en tenant compte uniquement de la ligne de démarcation extérieure $L_2$ de la voie de circulation $V_C$ du véhicule V, et
- en une autorisation donnée au véhicule de traverser la ligne de démarcation intérieure $L_1$ de cette même voie de circulation $V_C$.

Selon des variantes de réalisation, l'étape 200 de vérification d'une prochaine convergence des lignes de démarcation définissant la voie de circulation du véhicule est réalisée différemment.

On peut ainsi prévoir que cette dernière ne comporte pas la sous-étape 400 de vérification si la distance de convergence déterminée initialement est inférieure ou égale à la distance de visibilité Dv des lignes de démarcation $L_1$, $L_2$, de sorte que les étapes 240 à 280 sont systématiquement réalisées et que l'existence d'une prochaine convergence des deux lignes de démarcation $L_1$, $L_2$ sur la distance d'anticipation $D_A$ n'est validée que si l'écart entre la distance de convergence actualisée et la seconde distance de convergence est inférieur ou égal à un intervalle prédéterminé.

## Revendications

1. Procédé de détection, durant une phase de conduite automatisée d'un véhicule (V), de sa présence dans une voie d'insertion vers une route à chaussée séparée, le procédé comprenant les étapes suivantes :

   - vérification, en avant dudit véhicule et sur une distance d'anticipation prédéterminée ($D_A$), d'une prochaine convergence à une distance de convergence ($D_C$) des lignes de démarcation ($L_1$, $L_2$) définissant la voie de circulation ($V_C$) dudit véhicule (V) (200) ;
   - vérification, lorsqu'une prochaine convergence est détectée et à partir de la position du véhicule (V) et des données de cartographie, de l'existence d'une route à chaussée séparée au devant du véhicule (V) et à une distance inférieure ou égale à une distance de contrôle prédéterminée (300) ;
   - validation, lorsque l'existence d'une dite route à chaussée séparée est identifiée, de la présence dudit véhicule (V) sur une dite voie d'insertion (600) ; et
   - lorsque l'existence d'une dite route à chaussée séparée n'est pas identifiée à partir de la position du véhicule (V) et des données de cartographie, la présence dudit véhicule (V) sur une dite voie d'insertion n'est validée (600) que si l'une desdites lignes de démarcation ($L_1$, $L_2$) est de type discontinue et présente une largeur supérieure ou égale à une largeur minimale prédéterminée (500).

2. Procédé de détection selon la revendication 1, **caractérisé en ce que** ladite largeur minimale prédéterminée est comprise entre 250 et 300 mm.

3. Procédé de détection selon l'une des revendications 1 ou 2, **caractérisé en ce que** ladite distance d'anticipation ($D_A$) est comprise entre 100 et 200 mètres.

4. Procédé de détection selon l'une des revendications 1 à 3, **caractérisé en ce que** ladite distance de contrôle est supérieure de quelques dizaines de mètres à ladite distance de convergence ($D_C$).

5. Procédé de détection selon l'une des revendications 1 à 4, **caractérisé en ce qu'**il comporte après validation de la présence dudit véhicule (V) sur une dite voie d'insertion (600), une étape d'adaptation du contrôle longitudinal et latéral du véhicule (V) à ce contexte de conduite particulier (700).

6. Procédé de détection selon la revendication 5, **caractérisé en ce que** ladite étape d'adaptation (700) consiste pour le contrôle longitudinal à ajuster à la hausse la vitesse dudit véhicule (V) en tenant compte de la limitation de vitesse de la route à chaussée séparée sur laquelle il va prochainement s'insérer, et à prendre en compte les véhicules circulant sur la voie de ladite route à chaussée séparée jouxtant ladite voie de circulation ($V_C$).

7. Procédé de détection selon l'une des revendications 5 ou 6, **caractérisé en ce que** ladite étape d'adaptation (700) consiste pour le contrôle latéral à ajuster la trajectoire en tenant compte uniquement de la ligne de démarcation extérieure ($L_2$) de ladite voie de circulation (Vc), et à autoriser ledit véhicule à traverser la ligne intérieure de démarcation ($L_1$) de ladite voie de circulation ($V_C$).

8. Procédé de détection selon l'une des revendications 1 à 7, **caractérisé en ce que** ladite étape de vérification d'une prochaine convergence des lignes de démarcation ($L_1$, $L_2$) définissant la voie de circulation ($V_C$) dudit véhicule (V) (200) comporte les sous-étapes suivantes :

- détermination, à partir des données capturées par des moyens de détection optique (11) surveillant l'environnement situé en avant du véhicule (V), des profils des deux lignes de démarcation ($L_1$, $L_2$) définissant la voie de circulation ($V_C$) dudit véhicule (V) sur la distance de visibilité ($D_V$) desdites lignes ($L_1$, $L_2$) par lesdits moyens de détection (11) (210) ;
- extrapolation des profils desdites lignes de démarcation ($L_1$, $L_2$) entre ladite distance de visibilité (Dv) et une distance d'anticipation prédéterminée ($D_A$) (220) ;
- vérification de la convergence desdites lignes de démarcation ($L_1$, $L_2$) sur ladite distance d'anticipation ($D_A$) (230) ;
- mémorisation en cas de convergence détectée de la distance de convergence ($D_C$) desdites lignes de démarcation ($L_1$, $L_2$) (240) ;
- actualisation, au terme d'un délai prédéterminé ($\Delta T$), de ladite distance de convergence ($D_C$) en soustrayant à la valeur précédemment mémorisée la distance parcourue par ledit véhicule (V) durant ledit délai ($\Delta T$) (260) ;
- détermination, de manière simultanée à ladite étape d'actualisation (260), d'une seconde distance de convergence par reproduction desdites sous-étapes de détermination des profils (210), d'extrapolation de ces derniers (220), de vérification de la convergence (230) et de mémorisation (240) (270) ; et
- validation de l'existence d'une prochaine convergence, à ladite distance de convergence actualisée, des profils des deux lignes de démarcation ($L_1$, $L_2$) définissant la voie de circulation ($V_C$) du véhicule (V) si l'écart entre ladite distance de convergence actualisée et la seconde distance de convergence est inférieur ou égal à un intervalle prédéterminé (290).

9. Procédé de détection selon la revendication 8, **caractérisé en ce que** ledit intervalle prédéterminé est compris entre 30 et 70 centimètres.

**Patentansprüche**

1. Verfahren, um während einer automatisierten Fahrphase eines Fahrzeugs (V) zu erkennen, dass es sich in einer Einfädelspur zu einer Straße mit getrennter Fahrbahn befindet, wobei das Verfahren die folgenden Schritte umfasst:

- Prüfen, vor dem Fahrzeug und über eine vorbestimmte Vorausschaudistanz (DA), ob eine nächste Konvergenz in einer Konvergenzdistanz (DC) der Begrenzungslinien (L1, L2), die die Fahrspur (VC) des Fahrzeugs (V) (200) definieren, vorliegt;
- Verifizieren, wenn eine nächste Konvergenz erkannt wird, und anhand der Position des Fahrzeugs (V) und der Kartendaten, ob eine Straße mit getrennter Fahrbahn vor dem Fahrzeug (V) und in einer Entfernung von höchstens einer vorbestimmten Kontrollentfernung existiert (300) ;
- Validierung, wenn die Existenz einer solchen Straße mit getrennter Fahrbahn identifiziert wird, der Anwesenheit des Fahrzeugs (V) auf einer solchen Einfädelspur (600); und
- wenn die Existenz der Straße mit getrennter Fahrbahn nicht aus der Position des Fahrzeugs (V) und den Kartendaten identifiziert wird, die Anwesenheit des Fahrzeugs (V) auf einer Einfädelspur nur dann bestätigt wird (600), wenn eine der Begrenzungslinien (L1, L2) vom diskontinuierlichen Typ ist und eine Breite aufweist, die größer oder gleich einer vorbestimmten Mindestbreite (500) ist.

2. Erkennungsverfahren nach Anspruch 1, **dadurch gekennzeichnet, dass** die vorbestimmte Mindestbreite zwischen 250 und 300 mm liegt.

3. Detektionsverfahren nach einem der Ansprüche 1 oder 2, **dadurch gekennzeichnet, dass** die Antizipationsdistanz (DA) zwischen 100 und 200 Metern liegt.

4. Detektionsverfahren nach einem der Ansprüche 1 bis 3, **dadurch gekennzeichnet, dass** die Kontrolldistanz um einige Dutzend Meter größer ist als die Konvergenzdistanz (DC).

5. Erfassungsverfahren nach einem der Ansprüche 1 bis 4, **dadurch gekennzeichnet, dass** es nach der Validierung der Anwesenheit des Fahrzeugs (V) auf einer sogenannten Einfädelspur (600) einen Schritt zur Anpassung der Längs- und Seitenkontrolle des Fahrzeugs (V) an diesen besonderen Fahrkontext (700) umfasst.

6. Erfassungsverfahren nach Anspruch 5, **dadurch gekennzeichnet, dass** der Anpassungsschritt (700) für die Längskontrolle darin besteht, die Geschwindigkeit des Fahrzeugs (V) unter Berücksichtigung der Geschwindigkeitsbegrenzung der Straße mit getrennter Fahrbahn, auf der es sich demnächst einordnen wird, nach oben anzupassen und die Fahrzeuge zu berücksichtigen, die auf der an die Fahrspur (VC) angrenzenden Fahrspur der Straße mit getrennter Fahrbahn verkehren.

7. Erfassungsverfahren nach einem der Ansprüche 5 oder 6, **dadurch gekennzeichnet, dass** der Anpassungsschritt (700) für die Seitensteuerung darin besteht, den Kurs anzupassen, wobei nur die äußere Begrenzungslinie (L2) der Fahrspur (VC) berücksichtigt wird, und dem Fahrzeug zu erlauben, die innere Begrenzungslinie (L1) der Fahrspur (VC) zu überqueren.

8. Erfassungsverfahren nach einem der Ansprüche 1 bis 7, **dadurch gekennzeichnet, dass** der Schritt des Überprüfens einer bevorstehenden Konvergenz der Begrenzungslinien (L1, L2), die die Fahrspur (VC) des Fahrzeugs (V) (200) definieren, die folgenden Teilschritte umfasst:

- Bestimmung der Profile der beiden Grenzlinien (L1, L2), die die Fahrspur (VC) des Fahrzeugs (V) definieren, aus den von optischen Erfassungsmitteln (11), die die Umgebung vor dem Fahrzeug (V) überwachen, erfassten Daten über die Sichtbarkeitsdistanz (DV) der Linien (L1, L2) durch die Erfassungsmittel (11) (210) ;
- Extrapolation der Profile der Grenzlinien (L1, L2) zwischen der Sichtweite (DV) und einer vorbestimmten Voraussichtsentfernung (DA) (220) ;
- Prüfen, ob die Grenzlinien (L1, L2) auf die Antizipationsdistanz (DA) konvergieren (230) ;
- Speichern im Falle einer festgestellten Konvergenz der Konvergenzdistanz (DC) der Grenzlinien (L1, L2) (240) ;
- Aktualisierung, nach Ablauf einer vorbestimmten Zeit (∆T), der Konvergenzstrecke (DC) durch Subtraktion der von dem Fahrzeug (V) während der Zeit (∆T) zurückgelegten Strecke von dem zuvor gespeicherten Wert (260) ;
- Bestimmen, gleichzeitig mit dem Aktualisierungsschritt (260), einer zweiten Konvergenzstrecke durch Reproduzieren der Teilschritte des Bestimmens von Profilen (210), des Extrapolierens derselben (220), des Verifizierens der Konvergenz (230) und des Speicherns (240) (270); und
- Validierung der Existenz einer nächsten Konvergenz, bei dem aktualisierten Konvergenzabstand, der Profile der beiden Grenzlinien (L1, L2), die die Fahrspur (VC) des Fahrzeugs (V) definieren, wenn die Abweichung zwischen dem aktualisierten Konvergenzabstand und dem zweiten Konvergenzabstand kleiner oder gleich einem vorbestimmten Intervall ist (290).

9. Erfassungsverfahren nach Anspruch 8, **dadurch gekennzeichnet, dass** das vorbestimmte Intervall zwischen 30 und 70 Zentimetern liegt.

**Claims**

1. A method of detecting, during an automated driving phase of a vehicle (V), its presence in an insertion lane to a divided road, the method comprising the following steps:

- checking, ahead of said vehicle and over a predetermined anticipation distance (DA), for a next convergence at a convergence distance (DC) of the boundary lines (L1, L2) defining the traffic lane (VC) of said vehicle (V) (200);

- checking, when a next convergence is detected and from the position of the vehicle (V) and the mapping data, the existence of a divided road ahead of the vehicle (V) and at a distance less than or equal to a predetermined control distance (300);

- validating, when the existence of a said divided road is identified, the presence of said vehicle (V) on a said insertion lane (600); and

- when the existence of a said divided road is not identified from the position of the vehicle (V) and the mapping data, the presence of said vehicle (V) on a said insertion lane is validated (600) only if one of said boundary lines (L1, L2) is of discontinuous type and has a width greater than or equal to a predetermined minimum width (500).

2. The detection method according to claim 1, **characterised in that** said predetermined minimum width is between 250 and 300 mm.

3. A detection method according to any of claims 1 or 2, **characterised in that** said anticipation distance (DA) is between 100 and 200 metres.

4. Detection method according to one of the claims 1 to 3, **characterised in that** said control distance is a few tens of metres greater than said convergence distance (DC).

5. Detection method according to one of claims 1 to 4, **characterised in that** it comprises, after validation of the presence of said vehicle (V) on a said insertion lane (600), a step of adapting the longitudinal and lateral control of the vehicle (V) to this particular driving context (700).

6. Detection method according to claim 5, **characterized in that** said adaptation step (700) consists for the longitudinal control in adjusting upwards the speed of said vehicle (V) taking into account the speed limit of the divided road on which it is about to insert itself, and in taking into account the vehicles travelling on the lane of said divided road adjoining said traffic lane (VC).

7. A detection method according to one of claims 5 or 6, **characterised in that** said adaptation step (700) consists for the lateral control in adjusting the trajectory taking into account only the outer boundary line (L2) of said traffic lane (VC), and in allowing said vehicle to cross the inner boundary line (L1) of said traffic lane (VC).

8. A detection method according to any of claims 1 to 7, **characterised in that** said step of checking a forthcoming convergence of the boundary lines (L1, L2) defining the traffic lane (VC) of said vehicle (V) (200) comprises the following substeps:

- determining, from the data captured by optical detection means (11) monitoring the environment in front of the vehicle (V), the profiles of the two boundary lines (L1, L2) defining the traffic lane (VC) of said vehicle (V) over the visibility distance (DV) of said lines (L1, L2) by said detection means (11) (210);

- extrapolating the profiles of said boundary lines (L1, L2) between said visibility distance (DV) and a predetermined anticipation distance (DA) (220);

- checking the convergence of said boundary lines (L1, L2) on said anticipation distance (DA) (230);

- storing the convergence distance (DC) of said boundary lines (L1, L2) in case of detected convergence (240);

- updating, at the end of a predetermined delay ($\Delta T$), of said convergence distance (DC) by subtracting from the previously stored value the distance travelled by said vehicle (V) during said delay ($\Delta T$) (260);

- determining, simultaneously with said updating step (260), a second convergence distance by reproducing said profile determination (210), profile extrapolation (220), convergence verification (230) and storage (240) (270) substeps; and

- validating the existence of a next convergence, at said updated convergence distance, of the profiles of the two boundary lines (L1, L2) defining the traffic lane (VC) of the vehicle (V) if the difference between said updated convergence distance and the second convergence distance is less than or equal to a predetermined interval (290).

9. The detection method according to claim 8, **characterised in that** said predetermined interval is between 30 and 70 centimetres.

## Fig.1

1

| Module de détection | | 10 |
|---|---|---|

11  12

Module d'évaluation du contexte de conduite

30

Unité de pilotage

51

50

Module d'actionnement

20

Module de navigation

41  42  43

40

100

200 — NON → FIN

OUI

300 — OUI

NON

400

500 — NON → FIN

600

700

Fig.2

Fig.3

Fig.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150154458 A
- US 2014032047 A
- US 2015367778 A
- WO 2017023197 A
- US 2008291276 A
- DE 102007018990